# EUROPEAN PATENT SPECIFICATION

(11) **EP 2 949 497 B1**
(45) Date of publication and mention of the grant of the patent: **29.12.2021**
(21) Application number: 15169255.5
(22) Date of filing: 26.05.2015
(51) Int. Cl.: B60K 17/28, F16H 47/04

(54) **A transmission system for a vehicle**
Getriebevorrichtung für Fahrzeug
Système de transmission pour vehicules

(30) Priority: 27.05.2014 IT MO20140150
(43) Date of publication of application: 02.12.2015
(73) Proprietor: CNH Industrial Italia S.p.A., 10135 Torino (IT)
(72) Inventor: Benevelli, Alessandro, 42020 Albinea, Reggio Nell'Emilia (IT); Fiorati, Stefano, 45030 Occhiobello (Rovigo) (IT); Morselli, Riccardo, 41057 San Vito Di Spilamberto, Modena (IT); Ferrari, Fabrizio, 41125 Modena (IT); Sedoni, Enrico, 41126 Modena (IT)
(74) Representative: CNH Industrial IP Department

(56) References cited:
- EP-A1- 2 062 770
- DE-A1- 19 749 074
- FR-A1- 2 271 462
- US-A- 3 132 533
- US-A- 3 470 769
- US-A- 3 572 164
- US-A1- 2008 155 974
- US-A1- 2011 143 874
- US-B1- 6 600 980
- US-E- R E30 525

## Description

The invention relates to a transmission system for a vehicle, particularly an industrial or agricultural vehicle such as a tractor. The transmission system according to the invention can be used for example for transmitting power to a power take-off (PTO) of the vehicle or, in the alternative, to a driving axle of the vehicle.

Known tractors comprise an internal combustion engine and a transmission system for transmitting power from the engine to wheels or tracks of the tractor. Downstream of the transmission system, a power-take off is normally provided. One or more implements can be connected, if desired, to the power take-off so as to receive power from the engine through the transmission system.

In known tractors, the power take-off is connected to the engine by means of a transmission consisting only of mechanical gears. As a consequence, the speed of an output shaft of the power take-off is always proportional to the engine speed. However, in many cases it is desirable that the speed of the output shaft of the power take-off can be made independent of the engine speed, and in particular that the speed of the output shaft of the power take-off can be continuously varied independently of the engine speed.

Some solutions have been thought in order to obtain this result, as disclosed in WO 2012/110615. However, these solutions have the drawback that they require consistent constructional changes to be fitted on existing vehicles and involve a significant increase in dimensions of the rear part of the tractor.

Other transmission systems are known from US2008/155974A, US3470769A and US6600980B.

An object of the invention is to improve known transmission systems for transmitting power in a vehicle, particularly an industrial or agricultural vehicle such as a tractor. In particular, it is desired to improve transmission systems for transmitting power to a power take-off or a driving axle of the vehicle.

A further object is to provide a transmission system for transmitting power generated by an engine of a vehicle, which does not involve a significant increase in dimensions if compared to known transmission systems.

Another object is to provide a transmission system for transmitting power generated by an engine of a vehicle, which does not require excessive constructional changes to the vehicle if compared to known transmission systems.

A further object is to provide a transmission system for transmitting power generated by an engine of a vehicle, in which the output speed is not proportional to the engine speed.

In detail, it is desired that the output speed - for example the speed at the power take-off, or the speed at the driving axle - can be varied, in particular continuously, independent of the engine speed.

According to the invention, there is provided a transmission system for transmitting power generated by an engine of a vehicle according to claim 1

Owing to the invention, it is possible to obtain a transmission system having a compact and simple structure, because the whole transmission system exhibits only two main axes, namely the input axis and the output axis.

The overall dimensions of the transmission system are therefore such as to allow it to be installed on existing vehicles in place of known transmission systems.

Furthermore, due to its simple structure, the transmission system does not require consistent constructional changes to a vehicle when installed in place of a known transmission system.

In an embodiment, a gear set is provided between the planetary gear train and the axis opposite the one with which the planetary gear train is coaxial.

The gear set acts as a gearshift and can be used to select a preset speed at the output shaft.

In an embodiment, at least one of the power device and the further power device, if any, is so configured as to generate a minimum power at a peak power condition of the engine.

The power device can be selected from a group comprising: an electric generator, an electric motor, a hydraulic pump, a hydraulic motor.

The hydraulic pump can be either a variable displacement pump or a fixed displacement pump.

The hydraulic motor can be either a variable displacement motor or a fixed displacement motor.

The further power device, if any, can be selected from a group comprising: an electric generator, an electric motor, a hydraulic pump, a hydraulic motor.

The hydraulic pump can be either a variable displacement pump or a fixed displacement pump.

The hydraulic motor can be either a variable displacement motor or a fixed displacement motor.

In an embodiment, the power device is an electric motor and the further power device is an electric generator.

In an alternative embodiment, the power device is a hydraulic motor and the further power device is a hydraulic pump, the hydraulic motor and the hydraulic pump defining a hydrostatic unit.

A further input shaft can be provided, which is coupled to the hydraulic motor.

The output shaft can be connectable to the hydraulic pump.

The first input shaft can be couplable to an annular gear of the planetary gear train, so that the engine drives the annular gear, and the second input shaft can be couplable to a sun gear of the planetary gear train, so that the hydraulic motor drives the sun gear.

The output shaft can further be connectable to a power take-off of the vehicle.

Owing to this embodiment, the power take-off can be controlled so that its speed is independent of the engine speed. In particular, power can be split between the power take-off and the hydraulic pump as a function of working conditions and the power take-off can be driven at a speed which is continuously variable between a minimum value and a maximum value, as is the case with the hydraulic pump.

By coupling the first input shaft to the annular gear and the second input shaft to the sun gear, a mechanism is obtained having an output speed which varies continuously in the desired range.

In an embodiment, a gear assembly is interposed between the output shaft and the planetary gear train.

The gear assembly may comprise a first gear supported by a carrier of the planetary gear train and a second gear supported by the output shaft.

Owing to the gear assembly, the desired speed range at the power take-off may be obtained, while minimizing the dimensions of the transmission system.

In an embodiment, the hydraulic motor and/or the hydraulic pump are of the radial piston type.

This allows the transmission system to be kept as compact as possible.

In an embodiment, the input shaft and the further input shaft are coaxial.

In particular, the input shaft is housed inside the further input shaft, which is hollow.

This allows the dimensions of the transmission system to be further reduced.

In an embodiment, the output shaft is coupled to the hydraulic pump.

In particular, the output shaft may be fixed relative to a shaft of the hydraulic pump.

In an embodiment, the output shaft can be coaxial with the shaft of the hydraulic pump.

In an embodiment, the input shaft is couplable to the annular gear of the planetary gear train by means of a clutch.

Thus, the user can decide when power from the engine needs to be transmitted to the power take-off.

The invention can be better understood and carried out with reference to the attached drawings, that show some exemplifying and non-limiting embodiments thereof, in which:
Figure 1 is a schematic view showing a transmission system of a vehicle;
Figure 2 is a side view of the transmission system of Figure 1;
Figure 3 is a graph showing the speed of an engine and the speed at a power take-off of the vehicle, as a function of time;
Figure 4 is a graph showing how the speed at the power take-off varies as a function of the speed of the engine;
Figure 5 is a view like Figure 1, showing the transmission system in a first working condition;
Figure 6 is a view like Figure 1, showing the transmission system in a second working condition;
Figure 7 is a view like Figure 1, showing the transmission system in a third working condition;
Figure 8 is a view like Figure 1, showing a transmission system according to prior art;
Figure 9 is a view like Figure 1, showing a transmission system according to another alternative embodiment;
Figure 10 is a view like Figure 1, showing a transmission system according to prior art.

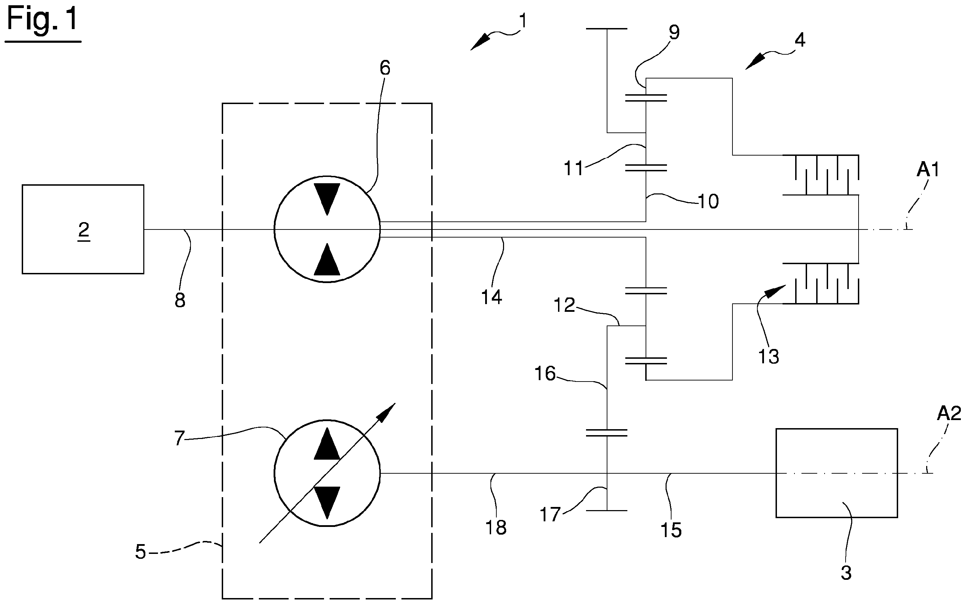

Figure 1 shows schematically a transmission system 1 of a vehicle, particularly an industrial or agricultural vehicle such as a tractor. The transmission system 1 allows power to be transmitted from an engine 2, particularly an internal combustion engine, to a plurality of wheels or tracks of the vehicle, that are not shown in the drawings.

The transmission system 1 further allows power to be transmitted to a power take-off 3, in order to drive one or more implements that can be connected to the power take-off 3.

The transmission system 1 comprises a planetary gear train 4, interposed between the engine 2 and the power take-off 3.

The planetary gear train 4 may comprise an annular gear 9 and a sun gear 10. A plurality of planet gears 11 are interposed between the annular gear 9 and the sun gear 10. The planet gears 11 are supported by a carrier 12.

The transmission system 1 further comprises a hydrostatic unit 5, arranged between the engine 2 and the power take-off 3. The hydrostatic unit 5 comprises a hydraulic motor 6 and a hydraulic pump 7. In the example shown, the hydraulic pump 7 is a variable displacement pump, whereas the hydraulic motor 6 is a fixed displacement motor.

However, this arrangement is not mandatory. In an embodiment which is not shown, the hydraulic motor 6 can be a variable displacement motor.

Both the hydraulic motor 6 and the hydraulic pump 7 can be of the radial piston type. Thus, the hydrostatic unit 5 can have a particularly compact structure, because radial piston pumps and motors have reduced dimensions if compared to other kinds of pumps and motors.

The hydraulic pump 7 is connected to the hydraulic motor 6 by means of an input line and of an output line, which are not shown. An operating fluid can be sent from the hydraulic pump 7 to the hydraulic motor 6, or vice versa, respectively through the input line and the output line.

The hydraulic pump 7 and the hydraulic motor 6 can be capable of working in a reversible manner. Hence, the hydraulic pump 7 can also work as a motor, whereas the hydraulic motor 6 can also work as a pump. In other words, the hydraulic pump 7 and the hydraulic motor 6 can be practically interchangeable.

The transmission system 1 is a continuously variable transmission (CVT) that allows the output speed to be continuously varied between a minimum value and a maximum value.

The transmission system 1 comprises a first input shaft 8, that is coupled to the engine 2, for example by means of a known joint, so as to be driven by the engine 2.

The first input shaft 8 is couplable to the planetary gear train 4, for example by means of a clutch 13. In particular, the first input shaft 8 is couplable to the annular gear 9 of the planetary gear train 4, so that the engine 2 may drive the annular gear 9.

The transmission system 1 further comprises a second input shaft 14, that can be connected to the hydraulic motor 6. The second input shaft 14 is couplable to the sun gear 10 of the planetary gear train 4, so that the hydraulic motor 6 may drive the sun gear 10. In particular, the second input shaft 14 can be directly coupled to the sun gear 10.

The first input shaft 8 and the second input shaft 14 can be coaxial. In particular, the first input shaft 8 and the second input shaft 14 can be arranged one inside the other. In the example shown, the first input shaft 8 is arranged inside the second input shaft 14, which is hollow. A particularly compact structure can therefore be obtained.

The transmission system 1 further comprises an output shaft 15 that can be coupled to the power take-off 3. The output shaft 15 allows the power take-off 3 to be connected to the planetary gear train 4. To this end, the carrier 12 can support a first gear 16, which meshes with a second gear 17 fixed relative to the output shaft 15. The first gear 16 and the second gear 17 act as a gear assembly connecting the planetary gear train 4 to the output shaft 15. Owing to the above mentioned gear assembly, the desired transmission ratio can be obtained at the output shaft 15.

The hydraulic pump 7 has a shaft 18 which is connected to the output shaft 15. The shaft 18 is fixed relative to the output shaft 15. In the example shown, the shaft 18 is coaxial with the output shaft 15.

In an embodiment, the output shaft 15 can be integral with the shaft 18, i.e. the output shaft 15 and the shaft 18 can be one and the same shaft.

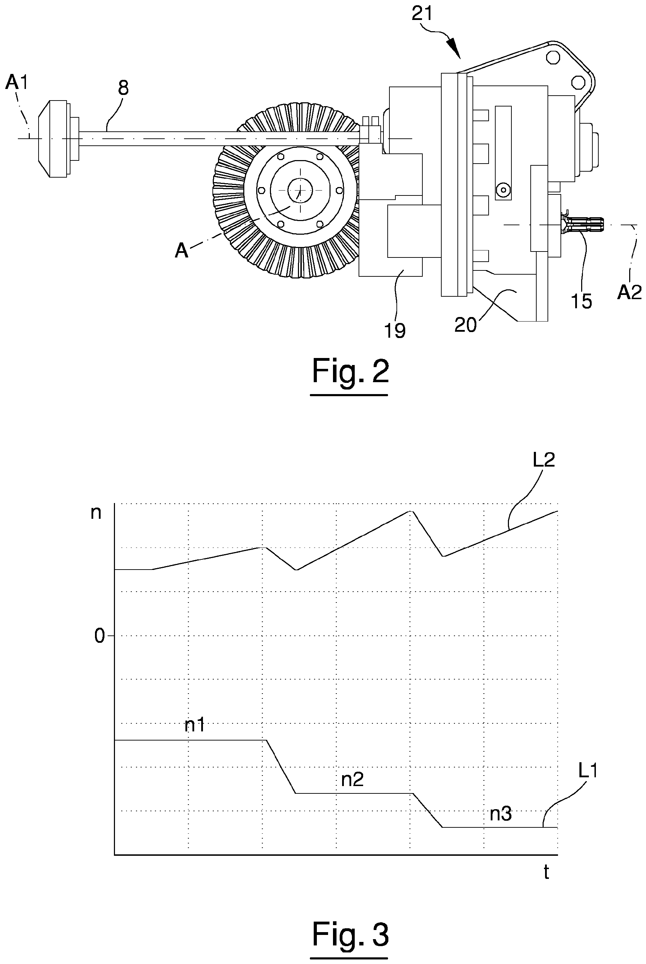

Figure 2 shows how the transmission system 1 can be practically installed on a vehicle.

The hydrostatic unit 5 is housed in a casing 19 and the planetary gear train 4 is housed in a further casing 20 facing the casing 19. The casing 19 and the further casing 20 define a box-like structure 21 which encloses the transmission system 1. The first input shaft 8 enters the box-like structure 21 at a first end region thereof, whereas the output shaft 15 exits the box-like structure 21 at a second end region thereof, opposite the first end region.

The whole box-like structure 21 is placed behind a rear axle A of the vehicle.

The transmission system 1 has a particularly compact structure. In more detail, the transmission system 1 has only two major axes, namely one input axis or first axis A1 and one output axis or second axis A2. The input axis A1 is defined by the axis of the first input shaft 8, the latter being coaxial with the second input shaft 14. The output axis is defined by the axis of the output shaft 15, which is coaxial with the shaft 18 of the hydraulic pump 7.

The input axis A1 is coaxial with the planetary gear train 4. In other words, the planetary gear train 4 has a central axis which is coaxial with the input axis A1.

The central axis of the planetary gear train 4 is the axis of the sun gear 10.

The input axis A1 is further coaxial with the hydraulic motor 6.

The output axis A2 is coaxial with the hydraulic pump 7.

The input axis A1 and the output axis A2 are different from one another. The input axis A1 and the output axis A2 can in particular be parallel to one another.

The input axis A1 and the output axis A2 may be placed on the same plane, which is also a middle plane of the transmission system 1.

Owing to its compact structure, the transmission system 1 can be installed on a vehicle in place of a known transmission system without major modifications of the vehicle. In particular, the casing 19 is interchangeable with existing casings and the same further casing 20 as in existing vehicles may be used. Only minor changes, such as replacement of a few pipes, reworking of certain surfaces and modifications of anchoring zones are needed. Thus, the transmission system 1 is practically interchangeable with a known transmission system.

In operation, the clutch 13 is engaged when it is desired to transmit power to the power take-off 3. Through the clutch 13, power is transmitted from the first input shaft 8 (i.e. from the engine 2) to the annular gear 9 of the planetary gear train 4. The planetary gear train 4 also receives power from the hydraulic motor 6, through the second input shaft 14 driving the sun gear 10. The motion of the planet gears 11 derives from the combination of rotations transmitted by the annular gear 9 and the sun gear 10. From the planet gears 11, motion is transmitted to the second gear 17 through the carrier 12 and the first gear 16. The output shaft 15, which is fixed relative to the second gear 17, is thus rotatingly driven. The output shaft 15 in turn transmits motion to the power take-off 3.

Owing to the transmission system 1, the speed of the output shaft 15, i.e. the speed at the power take-off 3, is no longer proportional to the engine speed.

This is confirmed by the graph of Figure 3, which shows a first line L1 corresponding to the speed of the engine 2 and a second line L2 corresponding to the speed at the power take-off 3, as a function of time t.

The first line L1 has been chosen so that the engine 2 exhibits three ranges in which its speed is constant, namely at a first value n1, a second value n2 and a third value n3. It has been found that, when the engine speed is constant, the speed of the output shaft 15 varies, for example linearly, as shown by the second line L2.

Thus, the speed at the power take-off 3 can be made independent of the engine speed.

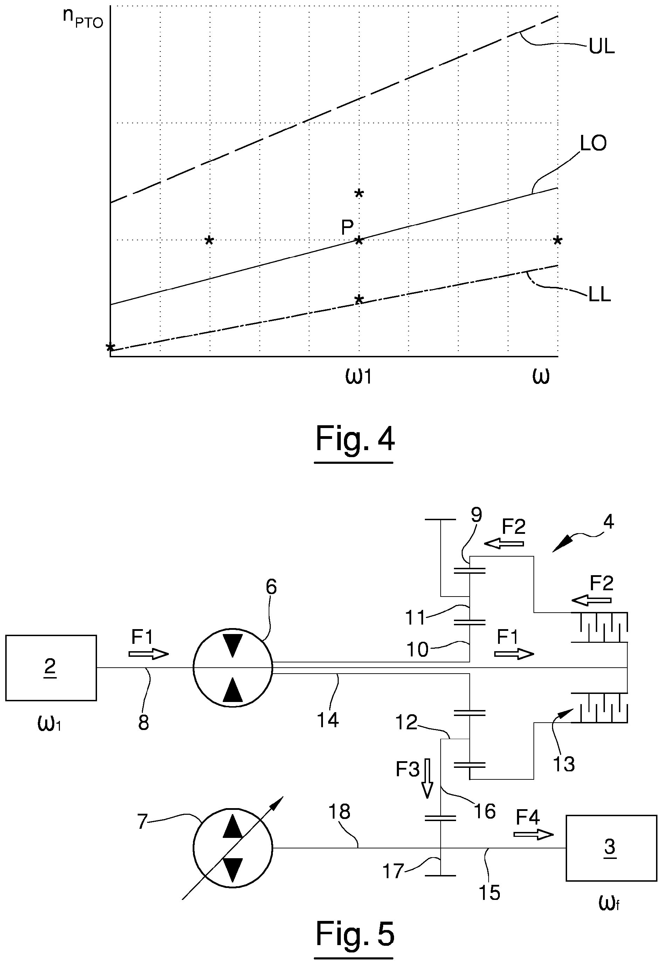

Figure 4 shows the range of speed values nPTO at the power take-off 3 that can be obtained by using the embodiment of the transmission system 1 shown in Figure 1, as a function of the engine speed ω.

This range of speed values is bounded by a lower line LL, corresponding to the minimum displacement of the hydraulic pump 7 (which is a variable displacement pump, as previously explained) and by an upper line UL, corresponding to the maximum displacement of the hydraulic pump 7. The minimum displacement of the hydraulic pump 7 is a negative value, corresponding to a preset rotation direction of the pump shaft 18, whereas the maximum displacement is a positive value, corresponding to an opposite rotation direction of the pump shaft 18.

As the engine speed varies, speed at the power take-off 3 can take all values comprised between the lower line LL and the upper line UL, depending also on displacement of the hydraulic pump 7.

In particular, the line L0 in Figure 4 joins the points in which displacement of the hydraulic pump 7 is zero. In this situation, torque transmitted to the hydrostatic unit 5 is zero and the pump shaft 18 is stationary. Hence, all the torque generated by the engine 2 is transmitted - apart from internal losses - to the power take-off 3.

The graph of Figure 4 also shows a working point P in which the engine speed is at a value ω1 corresponding to the peak power supplied by the engine 2. The working point P lies on the line L0, which means that the hydraulic pump 7 has zero displacement in the working point P. Thus, in the condition of peak power supplied by the engine 2, the hydrostatic unit 5 is not active and all power is transmitted to the power take-off 3. Power transmission at the power take-off 3 is therefore at its maximum efficiency.

This situation is also shown in Figure 5, in which the engine 2, rotating at the speed ω1 corresponding to a peak power condition, transmits power to the first input shaft 8 as indicated by the arrows F1. The first input shaft 8 is thus rotated and, through the clutch 13, transmits power to the annular gear 9 of the planetary gear train 4, as indicated by the arrows F2.

The hydraulic pump 7 is in a condition of zero displacement, which means that the hydraulic pump 7 does not send any hydraulic fluid to the hydraulic motor 6. The second input shaft 14 is therefore stationary. Hence, the sun gear 10 of the planetary gear train does not rotate. The planet gears 11, which are driven by the annular gear 9, in turn move the carrier 12, which transmits power to the second gear 17 through the first gear 16, as indicated by the arrow F3. The output shaft 15 is hence rotated at a speed ωf and power P1 is transmitted to the power take-off 3, as indicated by the arrow F4.

In the condition of Figure 5, power is transmitted to the power take-off 3 with the highest efficiency, because the hydrostatic unit 5 is inactive and hence there are no power losses through the hydrostatic unit 5. This allows the loss of power in the transmission system 1 to be minimized.

The speed ω1 of the engine 2 can be for example 1800 rpm, whereas the speed ωf at the power take-off 3 can be 1000 rpm.

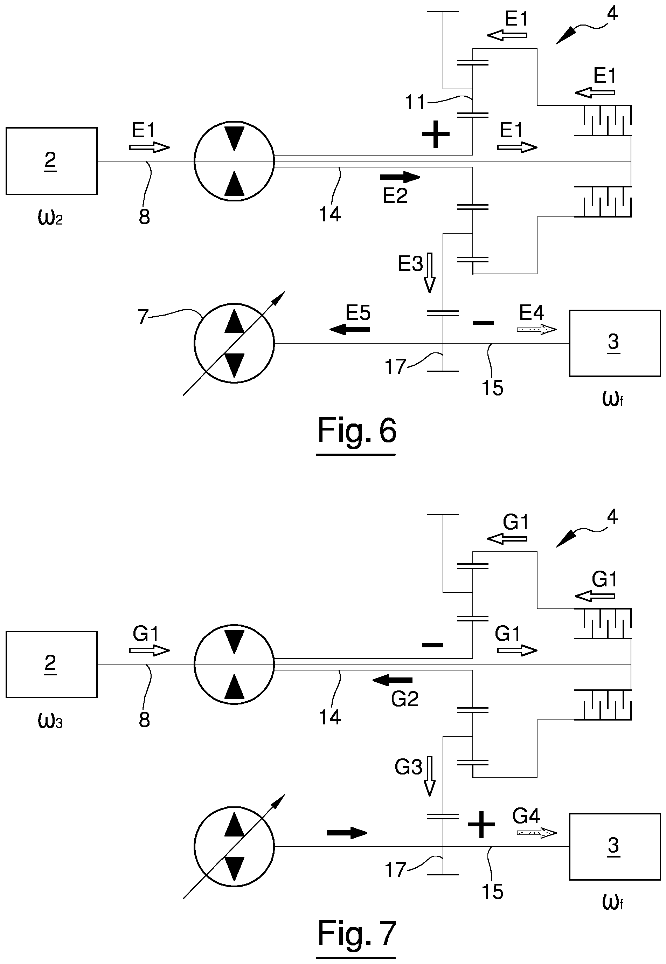

Figure 6 shows a situation corresponding to the peak torque generated by the engine 2. In this situation, both the planetary gear train 4 and the hydrostatic unit 5 are active. In particular, the hydrostatic unit 5 increases speed of the output shaft 15 by adding power supplied by the hydraulic motor 6 to the power supplied by the engine 2. The speed of the output shaft 15 can therefore be kept constant at the value wf.

In the situation of Figure 6, the engine 2 rotates at a speed ω2 of for example 1500 rpm and transmits power to the first input shaft 8 and hence to the planetary gear train 4, as indicated by the arrows E1. Also the second input shaft 14 rotates and in turn transmits power to the planetary gear train 4, as indicated by the arrow E2. At the planet gears 11, power transmitted to the planetary gear train 4 by the first input shaft 8 adds up to the power transmitted to the planetary gear train 4 by the second input shaft 14. The planetary gear train 4 in turn transmits power to the second gear 17, as indicated by the arrow E3. A fraction E4 of power from the planetary gear train 4 goes to the power take-off 3, whereas a further fraction E5 of power goes to the hydraulic pump 7.

The output shaft 15 is thus rotated at the speed ωf which, as mentioned before, can be 1000 rpm.

Figure 7 shows a situation corresponding to the rated speed of the engine 2, i.e. the maximum speed ω3 of the engine 2, that can be for example 2200 rpm. In this situation, the hydrostatic unit 5 decreases speed of the output shaft 15 because the hydraulic motor 6 removes a fraction of power supplied by the engine 2. Once again, the speed of the output shaft 15 can be kept constant at the value ωf.

In the situation of Figure 7, the engine 2 drives the first input shaft 8 and transmits power to the planetary gear train 4, as indicated by the arrows G1. The hydraulic motor 6 subtracts power from the power supplied by the engine 2, as indicated by the arrow G2. At the exit from the planetary gear train 4, the power resulting from the two contributions mentioned above is transmitted to the second gear 17, as indicated by the arrow G3. The second gear 17 in turn rotates the output shaft 15 at speed ωf, thereby transmitting power to the power take-off 3, as indicated by the arrow G4.

Figures 5-7 therefore correspond to three different working conditions in which power is distributed in different ways between the power take-off 3 and the hydraulic pump 7, but the speed at the power take-off 3 is always constant at the value wf. This confirms that, owing to the transmission system 1, speed at the power take-off 3 can be controlled independently of the speed at the engine 2.

In the embodiment which has been described above, the transmission system 1 comprises a power device, namely the hydraulic motor 6, and a further power device, namely the hydraulic pump 7.

In an alternative embodiment, the power device and the further power device, instead of being hydraulic, can be of a different kind, for example electric.

In particular, the power device can be an electric motor, and the further power device can be an electric generator.

The electric motor and the electric generator can be installed in a transmission system having the same layout as the one shown in Figure 1, in which the electric motor replaces the hydraulic motor 6, and the electric generator replaces the hydraulic pump 7.

In this case, the electric motor is coaxial with one axis of the transmission system 1, namely the input axis A1, and the electric generator is coaxial with another axis of the transmission system 1, namely the output axis A2.

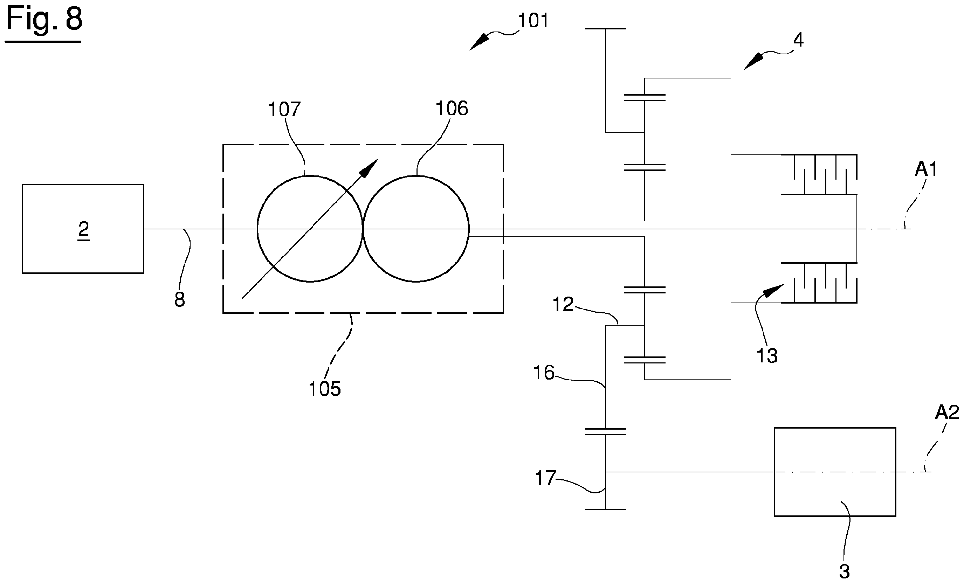

It is also possible that the electric motor and the electric generator be coaxial with one and the same axis. An example of this condition is shown in Figure 8.

Figure 8 shows a transmission system 101 having several components that are the same as the components of the transmission system 1 which has been described above. These common components have been indicated by the same reference numbers that have been previously used and will not be described in detail hereinafter.

The transmission system 101 comprises an electric motor 106 in place of the hydraulic motor 6 and an electric generator 107 in place of the hydraulic pump 7.

The electric motor 106 and the electric generator 107 define a power unit 105 of the electric type.

The electric motor 106 and the electric generator 107 are coaxial, i.e. they have a common axis that, in the example of Figure 8, coincides with the input axis A1. Also the planetary gear train 4 is coaxial with the input axis A1.

In addition to the input axis A1, the transmission system 101 has another major axis, namely the output axis A2, that in the example shown in Figure 8 is coaxial with the second gear 17 and the power take-off 3.

The transmission system 101 works in a manner which is completely similar to the working mode of the transmission system 1 shown in Figure 1.

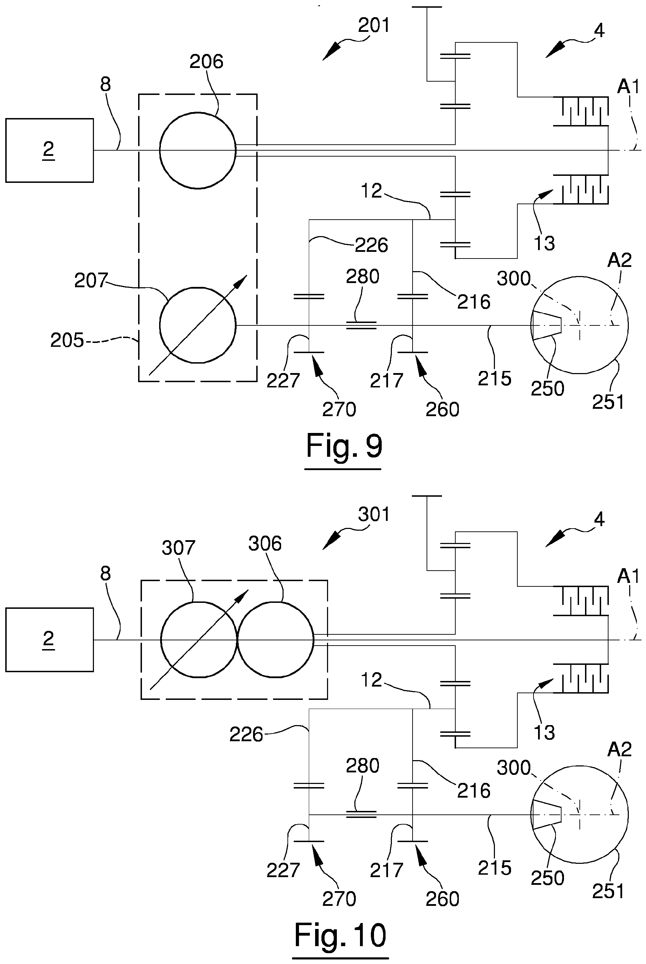

Instead of transmitting power from the engine 2 to the power take-off 3, the transmission system according to the invention can be used to transmit power from the engine 2 to a driving axle for traction of the vehicle. Exemplificative embodiments of this kind are shown in Figures 9 and 10.

In Figure 9, a transmission system 201 is shown for transmitting power from the engine 2 to a driving axle 300 of the vehicle. The driving axle 300 can in particular be a rear axle of the vehicle.

The transmission system 201 has an input axis A1 and an output axis A2.

A power device 206, that can either be a hydraulic motor or an electric motor, is provided in a position coaxial with the input axis A1. Also the planetary gear train 4 is coaxial with the input axis A1. The planetary gear train 4 has the same structure as the one shown in Figure 1.

The transmission system 201 comprises a further power device 207, that can be, for example, a hydraulic pump or an electric generator. The further power device is coaxial with the output axis A2.

The power device 206 and the further power device 207 define a power unit 205.

An output shaft 215 is provided along the output axis A2. In the example shown, the output shaft 215 supports a bevel gear 250 which engages with a further bevel gear 251 supported by the driving axle 300. Power generated by the engine 2 can thus be transmitted to the driving axle 300 by the transmission system 201.

A gear assembly 260 is interposed between the planetary gear train 4 and the output shaft 215. The gear assembly 260 may comprise a first gear 216 supported by the carrier 12 of the planetary gear train 4 and a second gear 217 fixed relative to the output shaft 215. The first gear 216 meshes with the second gear 217.

A further gear assembly 270 is also provided between the planetary gear train 4 and the output shaft 215. The further gear assembly 270 comprises a gear 226 supported by the carrier 12 and a further gear 227 meshing with the gear 226 and fixed relative to the output shaft 215.

The first gear 216 and the second gear 217 define a torque path through which torque can be transmitted from the planetary gear train 4 to the output shaft 215. The gear 226 and the further gear 227 define a further torque path for transmitting torque from the planetary gear train 4 to the output shaft 215.

A selector 280 is provided for allowing a user to select either the torque path defined by the first gear 216 and the second gear 217 or the further torque path defined by the gear 226 and the further gear 227. Thus, the user can change gear and hence speed at the output shaft 215.

In other words, the gears 216, 217, 226, 227 define a gear set interposed between the planetary gear train 4 and the output axis A2, which act as a gearshift for changing speed at the output shaft 215.

The transmission system 201 works in a way which is quite similar to the working mode of the transmission system 1 and which will not be described in detail again hereinafter.

Figure 10 shows a transmission system 301 which differs from the transmission system 201 shown in Figure 9 mainly because it comprises a power device 306 and a further power device 307 that have a common axis. In particular, the power device 306 and the further power device 307 can be coaxial with the input axis A1.

As stated above, the power device 306 can be an electric motor or a hydraulic motor, whereas the further power device 307 can be an electric generator or a hydraulic pump.

The other components of the transmission system 301 are the same as the components of the transmission system 201 shown in Figure 9 and will not be described in detail hereinafter.

The presence of the further power device, be it of a hydraulic or an electric type, is not essential. The further power device might also be located outside of the transmission system and be properly connected to the latter.

The transmission systems which have been described above have a simple and compact structure. They also allow the speed at the output to be varied independently of the engine speed.

## Claims

1. A transmission system for transmitting power generated by an engine (2) of a vehicle, the transmission system comprising:
- an input shaft (8) connectable to the engine (2), the input shaft (8) extending along a first axis (A1);
- an output shaft (15; 215) extending along a second axis (A2), the second axis (A2) being different from the first axis (A1);
- a power device (6; 206) coaxial with the first axis (A1);
- a planetary gear train (4) coaxial with the first axis (A1) comprising an annular gear (9) and a sun gear (10);
- a clutch (13) located on the first axis (A1); and
**characterized in that** the engine (2) when connected to the input shaft (8) transmits power to the annular gear (9) of the planetary gear train (4) through the clutch (13) and the system further comprises a further power device (7; 207) coaxial with the second axis (A2) and connected to the output shaft (15; 215); the further power device (7; 207) being a pump or a motor with variable displacement or an electric motor.

2. A transmission system according to claim 1, wherein the power device (6; 106; 206; 306) is selected from a group comprising: an electric generator, an electric motor, a hydraulic pump, a hydraulic motor.

3. A transmission system according to any preceding claim, wherein at least one of the power device (6; 206) and the further power device (7; 207), is so configured as to generate a minimum power when the engine (2) is in or around a peak power condition.

4. A transmission system according to claim 1, wherein the power device (6; 206) is a hydraulic motor (6) and the further power device (7; 207) is a hydraulic pump (7), the output shaft (15) being connectable to the hydraulic pump (7).

5. A transmission system according to claim 4, and further comprising a further input shaft (14) coupled to the hydraulic motor (6).

6. A transmission system according to claim 5, wherein the input shaft (8) is couplable to an annular gear (9) of the planetary gear train (4), so that the engine (2) drives the annular gear (9), the further input shaft (14) being couplable to a sun gear (10) of the planetary gear train (4), so that the hydraulic motor (6) drives the sun gear (10).

7. A transmission system according to claim 5, wherein the input shaft (8) and the further input shaft (14) are coaxial.

8. A transmission system according to claim 7, wherein the input shaft (8) is arranged inside the further input shaft (14), which is hollow.

9. A transmission system according to claim 4, wherein the hydraulic motor (6) and/or the hydraulic pump (7) are of the radial piston type.

10. A vehicle including a transmission system (1; 101) according to any preceding claim, wherein the output shaft (15) is connected to a power take-off (3).

11. A vehicle including a transmission system (201; 301) according to claim 1, wherein the output shaft (215) is connected to a driving axle (300).

12. A vehicle including a transmission system (1; 101; 201; 301) according to claim 1, the vehicle having a rear axle (A), the transmission system (1; 101; 201; 301) being installed behind the rear axle (A).

## Patentansprüche

1. Getriebeanordnung zum Übertragen der von einem Motor (2) eines Fahrzeugs erzeugten Leistung, wobei die Getriebeanordnung umfasst:
- eine Eingangswelle (8), die mit dem Motor (2) verbindbar ist, wobei sich die Eingangswelle (8) entlang einer ersten Achse (A1) erstreckt;
- eine Ausgangswelle (15; 215), die sich entlang einer zweiten Achse (A2) erstreckt, wobei sich die zweite Achse (A2) von der ersten Achse (A1) unterscheidet;
- eine Leistungseinrichtung (6; 206) koaxial zur ersten Achse (A1);
- einen Planetengetriebestrang (4) koaxial zur ersten Achse (A1) mit einem Hohlrad (9) und einem Sonnenrad (10);
- eine Kupplung (13), die auf der ersten Achse (A1) angeordnet ist; und
**dadurch gekennzeichnet, dass** der Motor (2), wenn er mit der Eingangswelle (8) verbunden ist, über die Kupplung (13) Leistung auf das Hohlrad (9) des Planetengetriebestrangs (4) überträgt und die Anordnung weiterhin eine weitere Leistungseinrichtung (7; 207) koaxial zur zweiten Achse (A2) umfasst, die mit der Ausgangswelle (15; 215) verbunden ist; wobei die weitere Leistungseinrichtung (7; 207) eine Pumpe oder ein Motor mit variabler Verdrängung oder ein Elektromotor ist.

2. Getriebeanordnung nach Anspruch 1, wobei die Leistungseinrichtung (6; 106;
206; 306) gewählt ist aus einer Gruppe, die umfasst: einen elektrischen Generator, einen Elektromotor, eine Hydraulikpumpe, einen Hydraulikmotor.

3. Getriebeanordnung nach einem der vorangehenden Ansprüche, wobei zumindest eine aus der Leistungseinrichtung (6; 206) und der weiteren Leistungseinrichtung (7; 207) dazu eingerichtet ist, eine minimale Leistung zu erzeugen, wenn der Motor (2) sich in oder um einen Spitzenleistungszustand befindet.

4. Getriebeanordnung nach Anspruch 1, wobei die Leistungseinrichtung (6; 206) ein Hydraulikmotor (6) ist und die weitere Leistungseinrichtung (7; 207) eine Hydraulikpumpe (7) ist, wobei die Ausgangswelle (15) mit der Hydraulikpumpe (7) verbindbar ist.

5. Getriebeanordnung nach Anspruch 4, weiterhin umfassend eine weitere Eingangswelle (14), die mit dem Hydraulikmotor (6) verbunden ist.

6. Getriebeanordnung nach Anspruch 5, wobei die Eingangswelle (8) mit einem Hohlrad (9) des Planetengetriebestrangs (4) verbindbar ist, sodass der Motor (2) das Hohlrad (9) antreibt, wobei die weitere Eingangswelle (14) mit einem Sonnenrad (10) des Planetengetriebestrangs (4) verbindbar ist, sodass der Hydraulikmotor (6) das Sonnenrad (10) antreibt.

7. Getriebeanordnung nach Anspruch 5, wobei die Eingangswelle (8) und die weitere Eingangswelle (14) koaxial sind.

8. Getriebeanordnung nach Anspruch 7, wobei die Eingangswelle (8) innerhalb der weiteren Eingangswelle (14) angeordnet ist, die hohl ist.

9. Getriebeanordnung nach Anspruch 4, wobei der Hydraulikmotor (6) und/oder die Hydraulikpumpe (7) in Radialkolben-Bauweise ausgebildet sind.

10. Fahrzeug mit einer Getriebeanordnung (1; 101) nach einem der vorangehenden Ansprüche, wobei die Ausgangswelle (15) mit einer Zapfwelle (3) verbunden ist.

11. Fahrzeug mit einer Getriebeanordnung (201; 301) nach Anspruch 1, wobei die Ausgangswelle (215) mit einer Antriebsachse (300) verbunden ist.

12. Fahrzeug mit einer Getriebeanordnung (1; 101; 201; 301) nach Anspruch 1, wobei das Fahrzeug eine Hinterachse (A) aufweist, wobei die Getriebeanordnung (1; 101; 201; 301) hinter der Hinterachse (A) eingebaut ist.

## Revendications

1. Système de transmission destiné à transmettre une puissance générée par un moteur (2) d'un véhicule, le système de transmission comprenant :
- un arbre d'entrée (8) qui peut être relié au moteur (2), l'arbre d'entrée (8) s'étendant le long d'un premier axe (A1) ;
- un arbre de sortie (15 ; 215) s'étendant le long d'un deuxième axe (A2), le deuxième axe (A2) étant différent du premier axe (A1) ;
- un dispositif de puissance (6 ; 206) coaxial par rapport au premier axe (A1) ;
- un train d'engrenage planétaire (4) coaxial par rapport au premier axe (A1) comprenant un engrenage annulaire (9) et un engrenage solaire (10) ;
- un embrayage (13) situé sur le premier axe (A1) ; et
**caractérisé en ce que** le moteur (2), lorsqu'il est connecté à l'arbre d'entrée (8), transmet de la puissance à l'engrenage annulaire (9) du train d'engrenage planétaire (4) via l'embrayage (13) et le système comprend en outre un autre dispositif de puissance (7 ; 207) coaxial par rapport au deuxième axe (A2) et relié à l'arbre de sortie (15, 215) ; l'autre dispositif de puissance (7 ; 207) étant une pompe ou un moteur à cylindrée variable ou un moteur électrique.

2. Système de transmission selon la revendication 1, dans lequel le dispositif de puissance (6 ; 106 ; 206 ; 306) est sélectionné parmi un groupe comprenant: un générateur électrique, un moteur électrique, une pompe hydraulique et un moteur hydraulique.

3. Système de transmission selon l'une quelconque des revendications précédentes, dans lequel au moins un dispositif de puissance (6 ; 206) et l'autre dispositif de puissance (7 ; 207), est configuré de façon à générer une puissance minimale lorsque le moteur (2) est ou se rapproche d'un état de puissance de crête.

4. Système de transmission selon la revendication 1, dans lequel le dispositif de puissance (6 ; 206) est un moteur hydraulique (6) et l'autre dispositif de puissance (7 ; 207) est une pompe hydraulique (7), l'arbre de sortie (15) pouvant être relié à la pompe hydraulique (7).

5. Système de transmission selon la revendication 4, comprenant en outre un autre arbre d'entrée (14) relié au moteur hydraulique (6).

6. Système de transmission selon la revendication 5, dans lequel l'arbre d'entrée (8) peut être relié à un engrenage annulaire (9) du train d'engrenage planétaire (4), de sorte que le moteur (2) entraîne l'engrenage annulaire (9), l'autre arbre d'entrée (14) pouvant être relié à un engrenage solaire (10) du train d'engrenage planétaire (4), de sorte que le moteur hydraulique (6) entraîne l'engrenage solaire (10).

7. Système de transmission selon la revendication 5, dans lequel l'arbre d'entrée (8) et l'autre arbre d'entrée (14) sont coaxiaux.

8. Système de transmission selon la revendication 7, dans lequel l'arbre d'entrée (8) est agencé à l'intérieur de l'autre arbre d'entrée (14), qui est creux.

9. Système de transmission selon la revendication 4, dans lequel le moteur hydraulique (6) et/ou la pompe hydraulique (7) est/sont du type à piston radial.

10. Véhicule comprenant un système de transmission (1 ; 101) selon l'une quelconque des revendications précédentes, dans lequel l'arbre de sortie (15) est relié à une prise de force (3).

11. Véhicule comprenant un système de transmission (201 ; 301) selon la revendication 1, dans lequel l'arbre de sortie (215) est relié à un essieu moteur (300).

12. Véhicule comprenant un système de transmission (1 ; 101 ; 201 ; 301) selon la revendication 1, le véhicule comprenant un essieu arrière (A), le système de transmission (1 ; 101 ; 201 ; 301) étant installé derrière l'essieu arrière (A).
